# EUROPÄISCHE PATENTANMELDUNG

(11) **EP 4 582 368 A1**
(43) Veröffentlichungstag der Anmeldung: **09.07.2025**
(21) Anmeldenummer: 24212264.6
(22) Anmeldetag: 12.11.2024
(51) Int. Cl.: B67C 3/00, B65B 57/00, G05B 19/00, G05B 19/409, G06F 3/00, G06Q 50/04

(54) **ABFÜLLANLAGE MIT ZENTRALER STEUERUNGSEINRICHTUNG**

(30) Priorität: 04.01.2024 DE 102024100166
(71) Anmelder: Krones AG, 93073 Neutraubling (DE)
(72) Erfinder: Weber, Jacob, 93073 Neutraubling (DE); Zech, Thomas, 93073 Neutraubling (DE); Scharf, Ingo, 93073 Neutraubling (DE)
(74) Vertreter: Grünecker Patent- und Rechtsanwälte PartG mbB

(57) **Zusammenfassung**

Die vorliegende Erfindung betrifft eine Abfüllanlage mit mehreren Maschinen, von denen jede dazu ausgebildet ist, Betriebsfunktionen auf der Grundlage eines jeweiligen Befehlssatzes auszuführen, und einer zentralen Steuerungseinrichtung, die dazu ausgebildet ist, die Betriebsfunktionen der mehreren Maschinen zu steuern. Weiterhin umfasst die Abfüllanlage eine Grafische-Schnittstelle-Einrichtung, die dazu ausgebildet ist, mit der zentralen Steuerungseinrichtung zu kommunizieren und einem Benutzer eine grafisch unterstützte Programmierung der zentralen Steuerungseinrichtung bereitzustellen.

## Beschreibung

### Gebiet der Erfindung

Die vorliegende Erfindung betrifft das Gebiet der Abfüllanlagen und hier insbesondere die zentrale Steuerung/Regelung des Betriebs der Maschinen der Abfüllanlagen.

### Stand der Technik

Abfüllanlagen für Getränke oder dergleichen umfassen mehrere hintereinander geschaltete Produktionseinheiten, wie beispielsweise Füllmaschinen, Etikettiermaschinen und Verpackungsmaschinen. Diese können zumindest teilweise als Rundläufermaschinen ausgebildet sein, die mittels rotierender Übergabevorrichtungen aneinandergekoppelt sind. Alternativ können die Produktionseinheiten auch als Geradläufer ausgebildet sein und/oder über lineare Transporteinrichtungen, Verteileinrichtungen und Produktpuffer miteinander verbunden sein. Die einzelnen Maschinen einer Abfüllanlage kommunizieren nur mit direkten Vorgänger- beziehungsweise Nachfolge-Maschinen (in der Produktionslinie) mittels Signalaustausch und haben keine Informationen über Betriebszustände der anderen in der Linie enthaltenen Maschinen.

Einzelne Funktionen der individuellen Maschinen müssen manuell durch den Bediener angewählt werden beziehungsweise können nur durch unmittelbar vor- beziehungsweise nachgelagerte Maschinen in der Produktionslinie angewählt werden. Kundenspezifische Kontroll- und Beobachtungsfunktionen müssen pro Kommission in den jeweiligen Maschinen für jeden Kunden neu erstellt werden. Diese Funktionen können nicht für andere Maschinen wiederverwendet werden und können nur durch Fachexperten mit detaillierten Programmierkenntnissen erstellt werden. Des Weiteren müssen die Funktionen auch dynamisch gepflegt/angepasst und gewartet werden, wodurch Komplexität und Kosten für die Implementierung aktualisierter wie auch neuer Funktionen erhöht werden.

Es liegt somit der vorliegenden Erfindung eine Aufgabe dahingehend zugrunde, eine Abfüllanlage mit einer verbesserten programmierbaren Steuerungsvorrichtung bereitzustellen, die eine einfache und schnell zu implementierende dynamische Adaption der Steuerung der Betriebsabläufe der einzelnen Maschinen der Abfüllanlage ermöglicht.

### Beschreibung der Erfindung

Die oben genannte Aufgabe wird gelöst durch eine Abfüllanlage mit mehreren Maschinen, von denen jede dazu ausgebildet ist, Betriebsfunktionen auf der Grundlage eines jeweiligen Befehlssatzes auszuführen, und einer zentralen Steuerungseinrichtung, die dazu ausgebildet ist, die Betriebsfunktionen der mehreren Maschinen zu steuern. Weiterhin umfasst die Abfüllanlage eine Grafische-Schnittstelle-Einrichtung, die dazu ausgebildet ist, mit der zentralen Steuerungseinrichtung zu kommunizieren und einem Benutzer eine grafisch unterstützte Programmierung der zentralen Steuerungseinrichtung bereitzustellen.

Unter dem Begriff Steuerungseinrichtung wird hier eine Steuerungs- und/oder Regelungseinrichtung verstanden, und ebenso umfasst der Begriff "steuem" steuern und/oder regeln. Die Steuerungseinrichtung kann eine künstliche Intelligenz umfassen. Diese künstliche Intelligenz kann in Form eines künstlichen neuronalen Netzes ausgebildet sein. So können selbstlernende Systeme geeignet bei der Steuerung/Regelung der von den Arbeitsmaschinen der Anlage ausgeführten Herstellungs- und Behandlungsprozesse zum Einsatz gebracht werden.

Allgemein kann der Befehlssatz jeder Maschine in der jeweiligen Maschine (d.h. in einem Speicher oder Speichermedium) oder in einem außerhalb der jeweiligen Maschine befindlichen Speichermedium, beispielsweise der Cloud, gespeichert sein.

Die zentrale Steuerungseinrichtung im Zusammenspiel mit der Grafische-Schnittstelle-Einrichtung (GUI-Einrichtung) erlaubt erfindungsgemäß eine relativ einfach zu bedienende übergeordnete Steuerung sämtlicher Betriebsfunktionen/Linienabläufe der Maschinen der Anlage. Sämtliche Informationen über sämtliche Betriebsabläufe können dabei auf einem den einzelnen Betriebsfunktionen/Linienabläufen der Maschinen übergeordneten Steuerungsniveau Berücksichtigung finden. Hierbei können einzelne Befehle der Befehlssätze, insbesondere einzelne Befehle des Befehlssatzes einer der mehreren Maschinen mit einzelnen Befehlen des Befehlssatzes einer anderen der mehreren Maschinen, zur Optimierung des Prozessablaufs der Produktions-/Behandlungslinie der Anlage geeignet miteinander kombiniert werden.

Die zentrale Steuerungseinrichtung kann auch verteilt auf mehreren physikalischen Systemen laufen.

Sämtliche Informationen über die Produktionslinie können an der/für die zentrale Steuerungseinrichtung an zentraler Stelle bereitgestellt werden. Insbesondere lassen sich unterschiedliche Linienanwendungen flexibel und ohne kundenspezifische Programmierung in den Maschinen umsetzen. Spezielle Linienanwendungen können somit im Kundenprojekt konfiguriert werden. Im Vergleich zum Stand der Technik ist eine solche Lösung weniger fehleranfällig und es kann die Inbetriebnahmezeit einer neuen Produktionslinie reduziert werden. Auch erlaubt der Linienbetrieb über die zentrale Steuerung eine bessere einheitliche Dokumentation.

Gemäß einer Weiterbildung umfasst jede der Maschinen eine individuelle Maschinensteuerung, die dazu ausgebildet ist, die Betriebsfunktionen der jeweiligen Maschine auf der Grundlage des jeweiligen Befehlssatzes zu steuern, und dabei ist die zentrale Steuerungseinrichtung dazu ausgebildet ist, jede der individuellen Maschinensteuerungen zu steuern, um so die Betriebsfunktionen der mehreren Maschinen zu steuern. Insbesondere kann hierbei die zentrale Steuerungseinrichtung dazu ausgebildet sein, über die individuellen Maschinensteuerungen die Betriebsfunktionen der mehreren Maschinen zu steuern, und es kann die Grafische-Schnittstelle-Einrichtung dazu ausgebildet sein, dem Benutzer einen programmierbaren Zugriff auf den jeweiligen Befehlssatz der mehreren Maschinen bereitzustellen. Die einzelnen Befehle der Befehlssätze können auf der Grafische-Schnittstelle-Einrichtung grafisch dargestellt werden, sodass eine intuitive Verknüpfung einzelner Befehle in einem Prozessfluss einfach und schnell ermöglicht wird.

Insbesondere kann die Grafische-Schnittstelle-Einrichtung der Abfüllanlage dazu ausgebildet sein, dem Benutzer eine Low-Code- oder No-Code-Programmierung der zentralen Steuerungseinrichtung bereitzustellen. So ist eine intuitive Programmierung ohne spezifische Programmierkenntnisse beziehungsweise Kenntnisse einer bestimmten Programmiersprache möglich. Hierbei kann die Grafische-Schnittstelle-Einrichtung dazu ausgebildet sein, grafisch das Auswählen einzelner Befehle und das Erstellen von Verknüpfungen ausgewählter einzelner Befehle der jeweiligen Befehlssätze der mehreren Maschinen miteinander und/oder der zentralen Steuerungseinrichtung bereitzustellen.

Zudem können in der Low-Code- oder No-Code-Umgebung Betriebsabläufe kundenspezifisch konfiguriert werden und müssen nicht wie bisher durch Fachexperten mit detaillierten Programmierkenntnissen programmiert werden. Dadurch, dass Betriebsabläufe in einer übergreifenden Low-Code- oder No-Code-Umgebung konfiguriert werden, können implementierte Lösungen flexibel an verschiedene Aufstellungsarten der Produktionslinie angepasst werden. Auch sind die verarbeiteten Behälter- und Gebindearten in der Produktionslinie unabhängig von den in der Low-Code- oder No-Code-Umgebung geschaffenen Funktionsverknüpfungen.

Kundenseitige Manufacturing Execution Systems (MES) können über die flexiblen Konfigurationsmöglichkeiten der Low-Code- oder No-Code-Programmierung von Standardschnittstellen vorhandener Maschinen angebunden werden.

Gemäß einer weiteren Weiterbildung ist die Grafische-Schnittstelle-Einrichtung dazu ausgebildet, Informationen über die Betriebsfunktionen der jeweiligen Maschine anzuzeigen. Somit kann der Benutzer über dieselbe Grafische-Schnittstelle-Einrichtung, die der Programmierung der zentralen Steuerungseinrichtung dient, alle relevanten Betriebsparameter erfassen und, vorteilhafter Weise beispielsweise bei der Programmierung oder allgemein bei der Bedienung der Anlage, berücksichtigen.

Gemäß einer weiteren Weiterbildung umfasst die Anlage einen Chatbot, der die Grafische-Schnittstelle-Einrichtung umfasst. Bei dem Chatbot handelt es sich um ein computerimplementiertes Dialogsystem, mit dem per Texteingabe oder Sprache kommuniziert werden kann, sodass er eine Bedienung einer Maschine der Abfüllanlage durch die Bedienperson und insbesondere die Programmierung der zentralen Steuerungseinrichtung in intelligenter Weise unterstützt. Der Chatbot kann eine Sprachausgabe umfassen oder mit einer solchen verbunden sein. Über eine solche Sprachausgabe kann ein Dialog mit einer Bedienperson geführt werden. Der Chatbot kann eine von einem Mikrofon aufgenommene Spracheingabe oder eine Texteingabe von einer Bedienperson als Eingabe empfangen.

Weiterhin kann der Chatbot dazu ausgebildet sein, diagnostische Informationen über Betriebsabläufe der Maschinen zu präsentieren.

Der Chatbot kann ein Sprechererkennungsmodul umfassen, das insbesondere der Sprecheridentifikation dient. Es kann auch der Sprecherverifikation, d.h., der Überprüfung der von einer Bedienperson vorgegebenen Identität eines Sprechers dienen. Über das Sprechererkennungsmodul kann der Chatbot eine Bedienperson erkennen und er kann so den Dialog mit der erkannten Bedienperson an dieselbe anpassen. Beispielsweise wird der Dialog mit einer Bedienperson, die als eine erfahrene Bedienperson erkannt wird, sich von einem Dialog mit einer anderen Bedienperson, die als eine weniger erfahrene Bedienperson erkannt wird, hinsichtlich der Umständlichkeit und Ausführlichkeit unterscheiden. Der Dialog kann somit geeignet der Ausbildung bzw. Erfahrung der Bedienperson angepasst werden. Auch kann der Dialog der Kompetenz der erkannten Bedienperson angepasst werden, sodass verhindert werden kann, dass die Bedienperson eine Operation zu initiieren versucht, zu der sie nicht autorisiert ist.

Insbesondere kann der Chatbot mit einem Künstliche Intelligenz (KI) - Modul ausgestattet sein oder mit einem solchen verbunden sein, mithilfe dessen er lernen kann. So kann er beispielsweise nach Erkennung einer Bedienperson mithilfe des oben genannten Sprechererkennungsmoduls aus dem sich im Laufe der Zeit entwickelnden Dialogverhalten der Bedienperson auf den Erfahrungs-/Ausbildungsstand derselben schließen und das eigene Dialogverhalten entsprechend dem Lernergebnis anpassen. So kann ein Bedienerprofil einer Bedienperson dynamisch geführt, abgespeichert und zum Lernen genutzt werden. Das Bedienerprofil kann Daten über die Qualifikation und Kompetenzen der Bedienperson enthalten, die bestimmen, inwieweit die Bedienperson auf den Betrieb welcher Maschinen und Komponenten der Maschinen Einfluss nehmen darf. Auch kann das Bedienerprofil bei der Spracherkennung einer Spracheingabe einer Bedienperson Verwendung finden. Das KI-Modul kann auch zum Lernen/Trainieren der oben genannten Spracherkennung und Sprechererkennung Verwendung finden. Insbesondere kann das KI-Modul die Bedienperson beim Programmieren der der zentralen Steuerungseinrichtung mithilfe der Grafische-Schnittstelle-Einrichtung in intelligenter Weise unterstützen. Das KI-Modul kann für ein maschinelles Lernen ausgerichtet sein und ein künstliches neuronales Netz sein oder ein solches umfassen.

Die Abfüllanlage gemäß einem der oben beschriebenen Beispiele kann eine Anlage zur Herstellung und Behandlung von Kunststoffflaschen oder Glasflaschen oder Aluminiumdosen oder allgemeiner Behälter aus Kunststoff oder Glas oder Aluminium sein, oder die Abfüllanlage gemäß einem der oben beschriebenen Beispiele kann eine Anlage zur Herstellung und Behandlung von Behältern aus zumindest einem natürlich-organischen Material (beispielsweise Papier) oder zumindest ein natürlich-organisches Material (beispielsweise Papier) umfassend sein.

Somit umfassen gemäß einer Weiterbildung die mehreren Maschinen eine Herstellungsmaschine zum Ausbilden von Behältern aus Kunststoff, insbesondere eine Blasmaschine, oder zum Ausbilden von Behältern aus Glas, oder zum Ausbilden von Behältern aus Aluminium, eine Füllmaschine zum Füllen der ausgebildeten Behälter und eine Etikettiermaschine zum Etikettieren der ausgebildeten Behälter oder der gefüllten Behälter.

Gemäß einer weiteren Weiterbildung umfassen die mehreren Maschinen eine Herstellungsmaschine zum Ausbilden von Behältern aus zumindest einem natürlich-organischen Material oder zumindest ein natürlich-organisches Material umfassend, eine Füllmaschine zum Füllen der ausgebildeten Behälter und eine Dekorationsmaschine zum Dekorieren der ausgebildeten oder gefüllten Behälter.

Im Folgenden werden Ausführungsformen eines erfindungsgemäßen Verfahrens unter Bezugnahme auf die Zeichnung beschrieben. Die beschriebenen Ausführungsformen sind in jeder Hinsicht lediglich als illustrativ und nicht als einschränkend anzusehen und verschiedene Kombinationen der angeführten Merkmale sind in der Erfindung eingeschlossen.
Figur 1 zeigt schematisch eine Anlage zur Herstellung und Behandlung von Kunststoffbehältern gemäß einem Beispiel der vorliegenden Erfindung.
Figur 2 zeigt eine GUI, die beispielhaft zur Programmierung der Steuerung einer Anlage zur Herstellung und Behandlung von Behältern verwendet werden kann.
Figur 3 zeigt Details einer beispielhaften Abfüllanlage.
Figur 4 zeigt schematisch eine Anlage zur Herstellung und Behandlung von Behältern aus zumindest einem natürlich-organischen Material oder zumindest ein natürlich-organisches Material umfassend gemäß einem Beispiel der vorliegenden Erfindung.

Die vorliegende Erfindung betrifft eine Abfüllanlage beziehungsweise Anlage zur Herstellung und Behandlung von Behältern mit mehreren Maschinen und insbesondere die Steuerung beziehungsweise Programmierung der Steuerung von Betriebsabläufen der Maschinen. Die Programmierung einer zentralen Steuereinrichtung der Anlage erfolgt intuitiv und einfach über eine Grafische-Schnittstelle-Einrichtung (GUI), die eine Low-Code- oder No-Code-Programmierung bereitstellt.

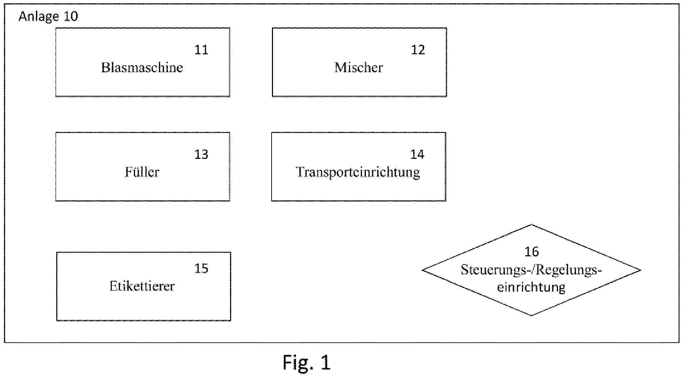

Eine beispielhafte Anlage 10 ist schematisch in Figur 1 gezeigt. Die Anlage 10 umfasst mehrere Maschinen, von denen jede dazu ausgebildet ist, ihre Betriebsfunktionen auf der Grundlage eines jeweiligen Befehlssatzes auszuführen. Die mehreren Maschinen der Anlage 10 umfassen eine Blasmaschine 11 zur Herstellung von Kunststoffbehältern, einen Mischer 12 zur Herstellung des abzufüllenden Produkts, einen Füller 13 zum Abfüllen des Produkts in die in der Blasmaschine 11 hergestellten Kunststoffbehälter, eine Transporteinrichtung 14 mit mehreren Transportändern und gegebenenfalls Transportsternen zum Transport der Behälter zwischen den einzelnen Maschinen und einen Etikettierer 15 zum Etikettieren der hergestellten oder gefüllten Behälter.

Weiterhin umfasst die Anlage 10 eine zentrale Steuerungs-/Regelungseinrichtung 16, die dazu ausgebildet ist, die Betriebsfunktionen der einzelnen Maschinen zu steuern. Jede der mehreren Maschinen kann ihre eigene Software aufweisen, die beispielsweise in einem Speicher der jeweiligen Maschine oder in der Cloud gespeichert ist, und Events/Prozesse der jeweiligen Maschine abbildet. Die Steuerung durch die zentrale Steuerungs-/Regelungseinrichtung 16 erfolgt über eine entsprechende Programmierung, die den Zugriff auf die Software der Maschinen erlaubt. Mithilfe der entsprechend programmierten zentralen Steuerungs-/Regelungseinrichtung 16 werden Befehle der Software der Maschinen geeignet kombiniert, um den Betriebsablauf der Produktionslinie zu steuern und optimieren.

Die Steuerungs-/Regelungseinrichtung 16 kann eine künstliche Intelligenz umfassen. Diese künstliche Intelligenz kann in Form eines künstlichen neuronalen Netzes ausgebildet sein. So können selbstlernende Systeme geeignet bei der Steuerung/Regelung der von den Arbeitsmaschinen der Anlage ausgeführten Herstellungs- und Behandlungsprozesse zum Einsatz gebracht werden.

Die Programmierung der zentralen Steuerungs-/Regelungseinrichtung 16 erfolgt mithilfe einer Grafische-Schnittstelle-Einrichtung (GUI), die dazu ausgebildet ist, mit der zentralen Steuerungseinrichtung zu kommunizieren und einem Benutzer eine grafisch unterstützte Programmierung, insbesondere Low-Code- oder Nlα-Code-Prαgrammierung, der zentralen Steuerungseinrichtung bereitzustellen.

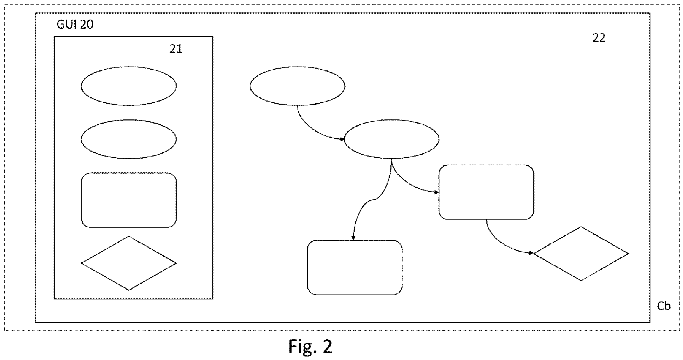

Ein Beispiel für eine solche GUI, wie sie beispielsweise in der Anlage 10 implementiert sein kann, ist in Figur 2 gezeigt. Die in Figur 2 gezeigte GUI 20 stellt grafisch eine Mehrzahl verschiedener Befehle in einem Befehlsfenster 21 bereit. Diese in dem Befehlsfenster 21 bereitgestellten Befehle können von einem Nutzer, beispielsweise mithilfe einer Computer-Mouse, ausgewählt werden und nach entsprechendem Einfügen/Verschieben in einem Hauptfenster 22, beispielsweise durch Ziehen mit der Computer-Mouse, zur Verwendung bereitgestellt werden. In dem Hauptfenster 22 erfolgt eine Verknüpfung der ausgewählten Befehle miteinander durch den Nutzer, wie es in Figur 2 durch die Pfeile angezeigt wird.

Die GUI 20 stellt somit eine einfach und intuitiv zu bedienende Low-Code- oder No-Code-Programmierung bereit, die eine Konfiguration der Betriebsabläufe der Anlage, beispielsweise der in Figur 1, Figur 3 oder Figur 4 gezeigten Anlage, ohne spezielle Programmierkenntnisse ermöglicht.

Insbesondere kann die GUI 20 von einem Chatbot Cb umfasst sein, der die Nutzung der GUI 20 durch einen Nutzer weiter vereinfacht. Der Chatbot Cb kann ein selbstlernenden Chatbot sein und der Lernprozess kann mithilfe einer Trainiereinheit erfolgen, die Daten sammelt und bewertet und empfangene Sprachdaten und erkannte semantische Inhalte in einem Speicher ablegt. Weiterhin kann in dem Speicher ein Bedienerprofil einer Bedienperson gespeichert und aktualisiert werden. Beispielsweise kann von dem Chatbot Cb gelernt werden, wie sich der Kenntnisstand einer mithilfe der Sprechererkennung erkannten Bedienperson im Verlaufe der Zeit ändert und es kann ein Dialog mit dieser Bedienperson im Laufe der Zeit dem sich ändernden Kenntnisstand der Bedienperson angepasst werden.

Weiterhin kann über die GUI 20 der Bedienperson ein Virtual Reality - oder Augmented Reality -Ausgabe präsentiert werden, die sowohl zur Unterstützung des Dialogs mit der Bedienperson als auch zur Darstellung von diagnostischen und anderen Betriebsdaten Verwendung finden kann. Die Virtual Reality - oder Augmented Reality - Ausgabe kann eine insbesondere simulierte animierte Darstellung von Informationen, beispielsweise über Betriebsabläufe von Maschinen der Abfüllanlage, enthalten.

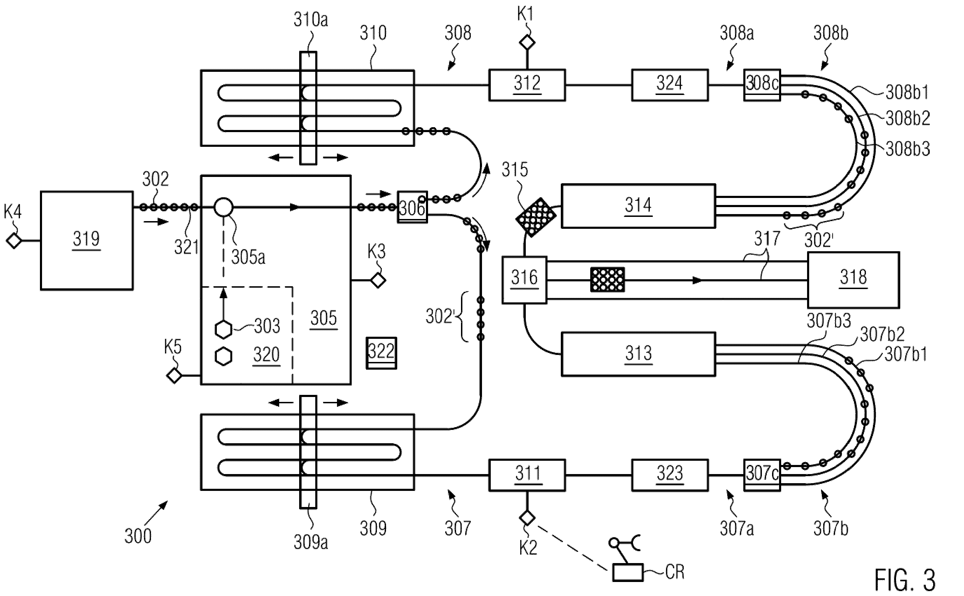

Eine beispielhafte Abfüllanlage 300, die die in Figur 1 gezeigte Anlage 10 umfassen kann, ist in Figur 3 dargestellt. Die Abfüllanlage 300 zum Befüllen von Behältern 302, 303, beispielsweise Kunststoffflaschen, mit einem flüssigen Produkt, wie beispielsweise einem Getränk oder dergleichen, umfasst eine Füllmaschine 305 zum Befüllen und Verschließen der Behälter 302, 303 und eine stromabwärts der Füllmaschine 305 vorgesehene Verteileinrichtung 306 zum Verteilen der Behälter 302, 303 auf zwei getrennt steuerbare Transportstrecken 307, 308, in denen jeweils wenigstens ein Behälterpuffer 309, 310 mit verstellbaren Behälterführungen 309a, 310a vorgesehen ist. Den Behälterpuffern 309, 310 nachgeschaltet sind Etikettiermaschinen 311, 312 sowie Verpackungsmaschinen 313, 314 zum Herstellen von Behältergebinden 315. Diese werden einer Sammel- und Verteileinrichtung 316 zugeführt, so dass die Behältergebinde 315 auf stromabwärts der Sammel- und Verteileinrichtung 316 vorgesehene Sortierspuren 317 verteilt werden und einer Kommissioniereinrichtung 318 zugeführt werden können.

Die Transportstrecken 307, 308 umfassen jeweils erste eingangsseitige Abschnitte 307a, 308a, die einspurig und für den drucklosen Transport der Behälter 302, 303 ausgebildet sind. Ferner umfassen die Transportstrecken 307, 308 ausgangsseitige zweite Abschnitte 307b, 308b, die jeweils mehrspurig für den drucklosen Transport der Behälter 302, 303 ausgebildet sind. Für die Verteilung der Behälter 302, 303 von dem einspurigen ersten Abschnitt 307a, 308a auf die einzelnen Spuren des zweiten Abschnitts 307b, 308b, die beispielsweise in Form separater Gassen 307b1 bis 307b3, 308b1 bis 308b3 ausgebildet sind, sind Weichen 307c, 308c oder entsprechende Verteileinrichtungen vorgesehen.

Weiterhin umfasst die Abfüllanlage 300 zwei Vorrichtungen zur Herstellung von Behältern 319, 320 in Form von Blasmaschinen 319, 320. Im gezeigten Beispiel sind getrennte Blasmaschinen 319, 320 zum Herstellen unterschiedlicher Behälter 302, 303, beispielsweise Behälter unterschiedlicher geometrischer Formen, vorgesehen. Es kann wenigstens eine der Blasmaschinen 319, 320 über eine eingangsseitige Transportstrecke 321 mit der Füllmaschine 3055 verbunden sein. Über eine eingangsseitige Weiche 305a können unterschiedliche einlaufende Behälterströme der weiteren Verarbeitung zugeführt werden können. Weitere Produktionseinheiten 323, 324 können etwa in Form von Schrumpftunneln vorgesehen sein.

Für die Steuerung der erfindungsgemäßen Abfüllanlage 300 ist eine zentrale Steuerungs-/Regelungseinrichtung 322 vorgesehen, die insbesondere mit der Verteileinrichtung 306, den Behälterpuffern 309, 310, den Etikettiermaschinen 311, 312 und Produktionseinheiten stromaufwärts der Verteileinrichtung 306, wie beispielsweise der Füllmaschine 305 und den Blasmaschinen 319, 320 kommuniziert. Die zentrale Steuerungs-/Regelungseinrichtung 322 kann der in Figur 1 gezeigten Steuerungs-/Regelungseinrichtung 16 entsprechen beziehungsweise diese umfassen. Insbesondere kann eine Programmierung der zentralen Steuerungs-/Regelungseinrichtung 322 mithilfe einer von einer GUI, beispielsweise der in Figur 2 gezeigten GUI 20, bereitgestellten Low-Code- oder No-Code-Programmierung erfolgen.

In dem gezeigten Beispiel sind die Etikettiermaschinen 311, 312 mit eigenen Kommunikations- und Steuereinrichtungen K1, K2, die Füllmaschine 305 mit einer eigenen Kommunikations- und Steuereinrichtung K3 und die Blasmaschinen 319, 320 mit eigenen Kommunikations- und Steuereinrichtungen K4, K5 verbunden. Jede der Kommunikations- und Steuereinrichtungen K1, K2, K3, K4, erlaubt über ein geeignetes Interface eine Bedienung der entsprechenden Maschine durch einen Benutzer. Die Kommunikations- und Steuereinrichtungen K1, K2, K3, K4, K5 sind den jeweiligen Maschinen der Abfüllanlage 300 logisch zugeordnet. Natürlich können sämtliche Maschinen der Abfüllanlage 300 mit eigenen Kommunikations- und Steuereinrichtungen ausgestattet sein, und es können die Kommunikations- und Steuereinrichtungen untereinander vernetzt sein, sodass sie sich über Betriebszustände der Maschinen und Anforderungen der Bedienpersonen austauschen können. Allgemein kann aus Sicherheitsgründen die Vernetzung der Kommunikations- und Steuereinrichtung mit den anderen Maschinen, mobilen kollaborativen Robotern (CR), aber auch Smartphones der Bedienpersonen, etc. auf einen definierten internen Bereich (beispielsweise in Form eines firmeneigenen Netzes) beschränkt werden und gleichzeitig ein Austausch im Internet zum selbständigem Lernen des Kommunikations- und Steuereinrichtung, beispielsweise hinsichtlich einer Spracherkennung oder Sprecheridentifikation ermöglicht werden.

Die zentrale Steuerungs-/Regelungseinrichtung 322 ist mit den Kommunikations- und Steuereinrichtungen K1, K2, K3, K4, K5 verbunden und kann die Koordination der Maschinen und Transporttechnik zumindest teilweise, beispielsweise bei der Organisation der Anlagenproduktion und der Sortenumstellung der Produkte übernehmen. Logisch und/oder physikalisch kann jeder Maschine eine Kommunikations- und Steuereinrichtungen K1, K2, K3, K4, K5 zugeordnet werden. Eine Bedienperson kann über die Kommunikations- und Steuereinrichtungen K1, K2, K3, K4, K5, beispielsweise mithilfe von Spracheingaben und Sprachdialogen, die jeweiligen Maschinen bedienen. Zumindest einige der Kommunikations- und Steuereinrichtungen K1, K2, K3, K4, K5 können jeweils einen Chatbot umfassen. Die Kommunikations- und Steuereinrichtungen K1, K2, K3, K4, K5 können Anzeigevorrichtungen, die bei den Maschinen positioniert sind, zum Anzeigen von Informationen verwenden. Implementierungen mit zentralen und verteilten Datenverarbeitungen und Datenbanken, auf die die zentrale Steuerungs-/Regelungseinrichtung 322 und die Kommunikations- und Steuereinrichtungen K1, K2, K3, K4, K5 zugreifen können, sind möglich.

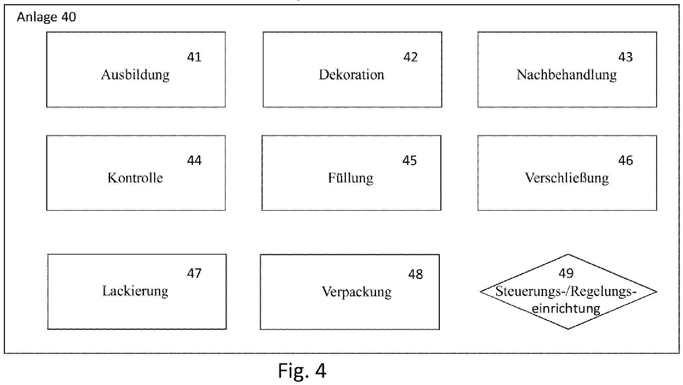

In Figur 4 ist eine beispielhafte Abfüllanlage 40, die die in Figur 1 gezeigte Anlage 10 umfassen kann, gezeigt, die zur Herstellung und Behandlung von Behältern aus zumindest einem natürlich-organischen Material oder zumindest ein natürlich-organisches Material umfassend ausgebildet ist. Die Anlage 40 umfasst eine Herstellungsmaschine 41 zum Ausbilden von Behältern, die aus zumindest einem natürlich-organischen Material bestehen oder zumindest ein natürlich-organisches Material umfassen. Beispielsweise kann die Herstellungsmaschine 1 zum Ausbilden von Behältern zum Ausbilden von Papierbehältern, etwa Papierflaschen, beispielsweise mit einem vorbestimmten Grasfaseranteil, ausgebildet sein. Die in der Herstellungsmaschine 41 hergestellten Behälter können in derselben Arbeitsmaschine oder nachfolgend mit einer Innenbeschichtung und/oder Außenbeschichtung versehen werden. Die Innenbeschichtung und/oder Außenbeschichtung kann der mechanischen Stabilität sowie Dichtigkeit des Behälters dienen. Die Anlage 40 kann eine Mehrzahl an parallel arbeitenden Herstellungsmaschinen 41 umfassen, und die von dieser Mehrzahl an parallel arbeitenden Herstellungsmaschinen 41 hergestellten Behälter können für die weitere Bearbeitung zusammengeführt werden. Somit kann auch bei einem relativ niedrigen Herstellungstakt ein relativ hoher Durchsatz erreicht werden.

Die Anlage 40 umfasst weiterhin eine Dekorationsmaschine 42, der die in der Herstellungsmaschine 41 ausgebildeten Behälter zum Dekorieren zugeführt werden. Das Dekorieren erfolgt durch Etikettieren und/oder Bedrucken der Behälter. Die Dekorationsmaschine 42 kann dazu ausgebildet sein, die Behälter mithilfe von Kaltleim oder Heißleim per Walzen- oder Sprühauftrag (GlueJet), oder APS -Etikettierung zu etikettieren. Die Dekorationsmaschine 42 kann dazu ausgebildet sein, die Behälter, beispielsweise stehend, mit einer Tinte zu bedrucken.

Die dekorierten Behälter werden in der in Figur 4 gezeigten Ausführungsform in einer Nachbehandlungsmaschine 43 einer Nachbehandlung unterzogen, die der Trocknung beziehungsweise Aushärtung der Druckmedien und/oder Etiketten dient.

Eine Kontrolle der Etikettierung und/oder Bedruckung der Behälter kann in einer Kontrollmaschine 44 der Anlage 40 erfolgen. Behälter, die hinsichtlich ihrer Bedruckung beziehungsweise Etikettierung Mindestqualitätsmaßstäbe unterschreiten, können ausgeschleust und beispielsweise recycelt werden.

Weiterhin umfasst die in der Figur 4 gezeigte Anlage 40 eine Füllmaschine 45 zum Füllen der in der Herstellungsmaschine 41 hergestellten Behälter. Die Füllung kann nach oder vor dem Dekorieren der Behälter in der Dekorationsmaschine 43 erfolgen.

Die von der Füllmaschine 45 gefüllten Behälter werden in einer Verschließmaschine 46 der Anlage 40 verschlossen. Die Verschließmaschine 46 kann dazu ausgebildet sein, die gefüllten Behälter, beispielsweise mit einem Schraubverschluss aus Metall oder Kunststoff oder einer Heiß-Versiegelung der Öffnung mit Alufolie, Kunststoff oder Papierfaser zu verschließen.

Vor (stromaufwärts) oder nach (stromabwärts) der Befüllung in der Füllmaschine 45 können die Behälter nach einer Lackiermaschine 47 zugeführt werden, in der sie durch Lackauftrag, etwa zum Schutz der aufgebrachten Tinte, versiegelt werden.

Schließlich können die verschlossenen gefüllten Behälter in einer Verpackungsmaschine 48 der Anlage 40 verpackt werden.

Der Betrieb der einzelnen Arbeitsmaschinen 41 bis 48 der Anlage 40 sowie Einrichtungen zum Transport der Behälter zwischen diesen Arbeitsmaschinen wird durch eine zentrale Steuerungs-/Regelungseinrichtung 49 der Anlage 40 gesteuert/geregelt. Das Steuerungs-/Regelungseinrichtung 49 kann eine künstliche Intelligenz umfassen, die in Form eines künstlichen neuronalen Netzes ausgebildet sein kann.

Insbesondere kann die zentrale Steuerungs-/Regelungseinrichtung 49 der Anlage 40 der zentralen Steuerungs-/Regelungseinrichtung 16 der in Figur 1 gezeigten Anlage 10 entsprechen. Eine Programmierung der zentralen Steuerungs-/Regelungseinrichtung 49 kann mithilfe einer von einer GUI, beispielsweise der in Figur 2 gezeigten GUI 20, bereitgestellten Low-Code- oder No-Code-Programmierung erfolgen, wie es oben beschrieben wurde.

## Patentansprüche

1. Abfüllanlage (10, 40, 300) mit
mehreren Maschinen, von denen jede dazu ausgebildet ist, Betriebsfunktionen auf der Grundlage eines jeweiligen Befehlssatzes auszuführen;
einer zentralen Steuerungseinrichtung (16, 49, 322), die dazu ausgebildet ist, die Betriebsfunktionen der mehreren Maschinen zu steuern; und
einer Grafische-Schnittstelle-Einrichtung (20), die dazu ausgebildet ist, mit der zentralen Steuerungseinrichtung (16, 49, 322) zu kommunizieren und einem Benutzer eine grafisch unterstützte Programmierung der zentralen Steuerungseinrichtung (16, 49, 322) bereitzustellen.

2. Die Abfüllanlage (10, 40, 300) gemäß Anspruch 1, in der
jede der Maschinen eine individuelle Maschinensteuerung umfasst, die dazu ausgebildet ist, die Betriebsfunktionen der jeweiligen Maschine auf der Grundlage des jeweiligen Befehlssatzes zu steuern; und
wobei die zentrale Steuerungseinrichtung (16, 49, 322) dazu ausgebildet ist, jede der individuellen Maschinensteuerungen zu steuern.

3. Die Abfüllanlage (10, 40, 300) gemäß Anspruch 2, in der
die zentrale Steuerungseinrichtung (16, 49, 322) dazu ausgebildet ist, jede der individuellen Maschinensteuerungen auf der Grundlage des jeweiligen Befehlssatzes zu steuern; und
die Grafische-Schnittstelle-Einrichtung (20) dazu ausgebildet ist, dem Benutzer einen programmierbaren Zugriff auf den jeweiligen Befehlssatz der mehreren Maschinen bereitzustellen.

4. Die Abfüllanlage (10, 40, 300) gemäß einem der vorhergehenden Ansprüche, in der der Befehlssatz jeder Maschine in der jeweiligen Maschine oder in einem außerhalb der jeweiligen Maschine befindlichen Speichermedium, beispielsweise der Cloud, gespeichert ist.

5. Die Abfüllanlage (10, 40, 300) gemäß einem der vorhergehenden Ansprüche, in der Grafische-Schnittstelle-Einrichtung (20) dazu ausgebildet ist, dem Benutzer eine Low-Code- oder No-Code-Programmierung der zentralen Steuerungseinrichtung bereitzustellen.

6. Die Abfüllanlage (10, 40, 300) gemäß Anspruch 5, in der die Grafische-Schnittstelle-Einrichtung (20) dazu ausgebildet ist, grafisch ein Auswählen einzelner Befehle und/oder ein Erstellen von Verknüpfungen ausgewählter einzelner Befehle der jeweiligen Befehlssätze der mehreren Maschine miteinander und/oder der zentralen Steuerungseinrichtung (16, 49, 322) bereitzustellen.

7. Die Abfüllanlage (10, 40, 300) gemäß einem der vorhergehenden Ansprüche, in der die Grafische-Schnittstelle-Einrichtung (20) dazu ausgebildet ist, Informationen über die Betriebsfunktionen der jeweiligen Maschine anzuzeigen.

8. Die Abfüllanlage (10, 40, 300) gemäß einem der vorhergehenden Ansprüche, die weiterhin einen Chatbot umfasst, der die Grafische-Schnittstelle-Einrichtung (20) umfasst.

9. Abfüllanlage (10, 300) gemäß einem der vorhergehenden Ansprüche, in der die mehreren Maschinen umfassen
eine Herstellungsmaschine (11,319,320) zum Ausbilden von Behältern aus Kunststoff, insbesondere eine Blasmaschine, oder zum Ausbilden von Behältern aus Glas oder Aluminium;
eine Füllmaschine (13, 305) zum Füllen der ausgebildeten Behälter; und
eine Etikettiermaschine (15, 311, 312) zum Etikettieren der ausgebildeten Behälter oder gefüllten Behälter.

10. Abfüllanlage (40) gemäß einem der Ansprüche 1 bis 8, in der die mehreren Maschinen umfassen
eine Herstellungsmaschine (41) zum Ausbilden von Behältern aus zumindest einem natürlich-organischen Material oder zumindest ein natürlich-organisches Material umfassend;
eine Füllmaschine (45) zum Füllen der ausgebildeten Behälter; und
eine Dekorationsmaschine (42) zum Dekorieren der ausgebildeten oder gefüllten Behälter.
